# EUROPEAN PATENT SPECIFICATION

(11) **EP 4 326 601 B1**
(45) Date of publication and mention of the grant of the patent: **20.08.2025**
(21) Application number: 22722795.6
(22) Date of filing: 14.04.2022
(51) Int. Cl.: B62D 25/00, B62D 29/00, B62D 65/00

(54) **METHOD TO SEAL AND/OR REINFORCE A CAVITY**
VERFAHREN ZUR ABDICHTUNG UND/ODER VERSTÄRKUNG EINES HOHLRAUMS
PROCÉDÉ POUR SCELLER ET/OU RENFORCER UNE CAVITÉ

(30) Priority: 19.04.2021 EP 21169151
(43) Date of publication of application: 28.02.2024
(73) Proprietor: Zephyros Inc., Romeo, MI 48065 (US)
(72) Inventor: PREGHENELLA, Bruno, 67140 Gertwiller (FR); JUNG, Frédéric, 67290 Zittersheim (FR)
(74) Representative: Kutzenberger Wolff & Partner
(86) International application number: PCT/EP2022/059979
(87) International publication number: WO 2022/223418

(56) References cited:
- WO-A1-2009/036784
- WO-A1-2010/099825
- US-A1- 2003 057 737

## Description

The present invention relates to a method to seal and/or reinforce a cavity in a vehicle with a sealing/reinforcement assembly. Document WO 2010/099825 A1 discloses a method to design a cavity.

It is well known state in the art to seal and/or reinforce a cavity in a vehicle with a sealing/reinforcement assembly. The sealing/reinforcement assembly is inserted into the cavity and subsequently foamed. However, each sealing/reinforcement assembly is tailormade for the specific application and its design requires a significant amount of engineering hours.

It was therefore the problem of the present invention to improve the method to seal and/or reinforce a cavity in a vehicle with a sealing/reinforcement assembly.

The problem is attained with a method to design a cavity of a vehicle, the cavity comprising a sidewall and define the position of a sealing/reinforcement assembly in the designed cavity and seal and/or reinforce the defined cavity with an expandable sealing/reinforcement assembly comprising the following steps:
a. determine the cross-section of the cavity
b. determine the orientation of the axial extension of the cavity
c. select the sealing/reinforcement assembly from a predetermined data set based on the data according to steps a - b,
d. determine the axial extension of the cavity without any hole in the sidewall,
e. place the sealing/reinforcement assembly into the designed cavity (1) and
f. expand the sealing/reinforcement assembly.

The present invention relates to a method to seal and/or reinforce a cavity in a vehicle. This cavity, which comprises a sidewall is preferably a part of the frame of the vehicle, for example an A-, B- and/or C-pillar, and/or part of the roof- and/or floor-frame of the vehicle. Other application of the cavity may be a cross member or the cowl of a vehicle or part of a tunnel, for example a transmission-tunnel. The cavity is preferably a part of a body in white. The sealing protects the cavity for example against humidity and/or dust and/or provides noise reduction. A reinforcement provides more stability for the cavity. The cross-section of the cavity at which the sealing/reinforcement assembly is placed is preferably square, rectangular, circular and/or elliptic. More than one sealing/reinforcement assembly may be placed in one cavity. The sealing/reinforcement assembly can be the same or different in material and/or in shape. The sealing/reinforcement assembly can be provided in parallel or at an angle relative to each other.

The sealing/reinforcement assembly is provided in the cavity in its unexpanded state. The sealing/reinforcement assembly is preferably fixed in the cavity for example by welding or clipping, for example with a pushpin. Together with the cavity, the sealing/reinforcement assembly can then be placed into an oven or the like in which the heat expandable material can be heated and expands as soon as a certain activation temperature has been reached. Due to the expansion, the cavity is sealed and/or reinforced. The skilled person understands that the energy to elevate the temperature of the expandable material can be provided by other means, for example microwave-radiation, radio-frequency-radiation and/or infrared-radiation.

The sealing/reinforcement assembly may comprise a carrier, which may comprise a rigid polymeric material. The carrier may comprise a flat metal sheet. The carrier may comprise an aluminum material. The carrier may be a metal stamping. The carrier may also include a mesh material. The carrier may include a variety of other materials such as polymers, elastomers, fibrous materials (e.g., cloth or woven materials), thermoplastics, plastics, nylon, and combinations thereof. The carrier may be flexible to allow for bending of the reinforcement assembly to fit a curve of a panel structure.

The sealing/reinforcement assembly further comprises an activatable material that may expand under the influence of heat. The skilled person understands that also other mechanisms to expand the activatable material are covered by the present invention. After placement of the sealing/reinforcement assembly into a cavity and heating the cavity, the activatable material expands, flows, cures or some combination thereof according to a predetermined set of conditions. For example, exposure to certain levels of heat causes the activatable material to expand. The volumetric expansion of the activatable material may vary depending upon the sealing-/reinforcement needs of a particular area of a panel or the like. The activatable material may expand at least about 100% as compared to the unexpanded activatable material in its green state. The activatable material may expand less than about 2000%. The activatable material may expand at least about 500%, at least about 1000%, or more. The activatable material may expand less than about 1000% or even less than about 500%.

The activatable material may be a resinous generally dry to the touch or tacky and may be shaped in any form of desired pattern, placement, or thickness, but is preferably of substantially uniform thickness. However, preferably, the activatable material is plate-shaped with a thickness being smaller than the length and the width of the plate. Though other heat-activated materials are possible for the activatable material, a preferred heat activated material is an expandable polymer or plastic, and preferably one that is foamable. The activatable material may have a green state viscosity so that it is resistant to flow when located within the plurality of apertures and prior to activation.

The activatable material may be a heat-cured material. The activatable material may cure at room temperature with no additional stimulus. The activatable material may undergo an induction cure, a microwave cure, an ultra-violet activated cure, or a moisture cure, any of which may occur at room temperature or at an elevated temperature. The activatable material may cure via a redox reaction cure system. The activatable material may comprise a two-component cure system wherein cure occurs upon mixing of the two-components. Typically, the activatable material cures at temperatures in the range of about 15°C to about 40°C.

The activatable material can be formed of other materials provided that the material selected is heat-activated or otherwise activated by an ambient condition (e.g. moisture, pressure, time or the like) and cures under appropriate conditions for the selected application. One such material is the epoxy based resin disclosed in U.S. Patent No. 6,131,897. Some other possible materials include, but are not limited to, polyolefin materials, copolymers and terpolymers with at least one monomer type an alpha-olefin, phenol/formaldehyde materials, phenoxy materials, and polyurethane materials with high glass transition temperatures. Additional materials may also be used such as those disclosed in U.S. Patent Nos. 5,766,719; 5,755,486; 5,575,526; and 5,932,680. A preferred activatable material is a product sold by the present applicant under the name L-2820.

In applications where the activatable material is a heat activated material, an important consideration involved with the selection and formulation of the material is the temperature at which a material cures and, if expandable, the temperature of expansion. Typically, the material becomes reactive (cures, expands or both) at higher processing temperatures, such as those encountered in an automobile assembly plant, when the material is processed along with the automobile structures at elevated temperatures or at higher applied energy levels, e.g., during coating (e.g., e-coat, paint or clearcoat) curing steps. While temperatures encountered in an automobile assembly operation may be in the range of about 148.89° C to 204.44° C (about 300° F to 400° F) for body shop applications (e.g., e-coat) and, for paint shop applications, are commonly about 93.33° C (about 200° F) or slightly higher (e.g., 120° C-150° C).

Preferably, the carrier and the activatable material are coextruded.

In a first step, step a., the cross-section of the cavity that is supposed to be sealed and/or reinforced is determined, preferably the shape and the size. In case the cross-section is essentially rectangular, the width and the height of the cavity at the location of the placement of the sealing/reinforcement assembly is determined, for example measured. In case the cross-section of the cavity changes with its axial extension, preferably an average shape and/or an average size is determined.

Further, in step b., the orientation of the axial extension of the cavity that is supposed to be sealed and/or reinforced relative to the gravitational force is determined. The axial extension is the direction perpendicular to its cross-section or the extension of the cavity in its lengthwise direction. Conventionally, the cavity's extension in axial direction is significantly larger than the extensions of the cross-section. Preferably, three categories, i.e. horizontal, inclined and vertical can be selected, wherein "horizontal" is in essentially a 90° angle relative to the gravitational force, "inclined" is preferably an angle > 20° and < 80°, preferably 40° - 60° relative to a horizontal plane and "vertical" is preferably essentially parallel to the gravitational force.

In the next step, step c, an expandable sealing/reinforcement assembly is selected based on the data according to steps a - c. Preferably, a table is provided, which comprises the dimension of the cross section of the cavity and the orientation of the cavity. Based on these input parameters, an expandable sealing/reinforcement assembly is suggested. The data provided in the table is specific for a certain activatable material, for example L-2820. The data is preferably also specific for a certain expansion temperature range. The table may be provided electronically. The data stored in the table may be acquired experimentally and/or electronically.

For the suggested expandable sealing/reinforcement assembly preferably data about the maximal expansion length is available, which specifies the expansion length in the length direction of the cavity. The length direction is the direction perpendicular to the cross section of the cavity. This expansion length is for example important to avoid that the activated expanded material blocks opening in the cavity which are needed to fix parts to cavity, for example screw-holes. The maximal expansion length will therefore guide the positioning of the expandable sealing/reinforcement assembly, such that no hole is blocked by the expanding material. The maximal expansion length can also be utilized to design the cavity, particularly the position of one or more holes in the sidewall of the cavity. These holes are preferably positioned such, that each hole is outside the maximal expansion length, so that they remain unblocked by the expanding material. Preferably, the maximal acceptable and/or desired expansion length is measured from the location where the expandable sealing/reinforcement assembly is fixed to the cavity.

According to a preferred embodiment of the present invention, the sealing/reinforcement assembly is fixed in the cavity in a fixation location, preferably in the geometrical center of the cross-section. Preferably, the geometrical center or the center of gravity of the expandable material prior to expansion coincides with the geometrical center of the cross section at the fixation location of the cavity. According to another preferred embodiment of the present invention, the center of the cross-section of the cavity at the location of the fixation point coincides with the center of the cross-section of the sealing/reinforcement assembly.

Preferably, the maximal acceptable expansion length is divided into two sub-length, one extending in one direction and one extending in the opposite direction relative to the fixation point at the cavity. More preferably, the two sub-length differ.

According to a preferred embodiment of the present invention, the sealing/reinforcement assembly is fixed in the cavity in a fixation location, preferably in the center of the cross-section. The sealing/reinforcement assembly can be welded or clipped to the cavity.

Preferably, the center of the cross-section of the cavity coincides with the center of the cross-section of the sealing/reinforcement assembly.

As mentioned above, the sealing/reinforcement assembly is selected based on a data set. Preferably, this data set comprises data about the width and the height of the cross section of the cavity, particularly in case the cavity has a square or rectangular cross-section.

The expected expansion length is divided into two sub-length, both preferably measured from the axial center of the sealing/reinforcement assembly and/or the fixation point of the sealing/reinforcement assembly in the cavity. Preferably, the sub-lengths differ. Inside this expansion length, preferably no holes in the cavity sidewall are placed to avoid blockage of the holes by expanding material.

The expandable component can be any component known the skilled artesian. Preferably, the component is a heat expandable component provided on a carrier. The carrier and the expandable component can be coextruded and/or over-molded and/or heat-welded and/or heat-bonded.

Preferably, the expandable material is heat-expandable. Preferably, the heat expandable material is expanded in an oven, preferably, that dries a body in white. However, other means to expand a component are also covered by this invention. The expansion can but need not take place in an oven.

Preferably, the data set is dependent upon circumstances that influence the rate of expansion, for example the temperature during expansion and/or the energy transferred to the sealing/reinforcement assembly, more preferably the temperature in an oven in which a body in white is cured.

The invention is now explained according to the Figures. These explanations do not limit the scope of protection.
- **Figs. 1a - c**: depict three embodiments of a sealing/reinforcement assembly in a cavity.
- **Fig. 2**: shows details of the cavity and the sealing/reinforcement assembly.
- **Figs. 3a - c**: depict the cavity in different spatial orientations.
- **Figs. 4 and 5**: depict predetermined data for cavities with different orientations.
- **Fig. 6**: depict design guidelines.

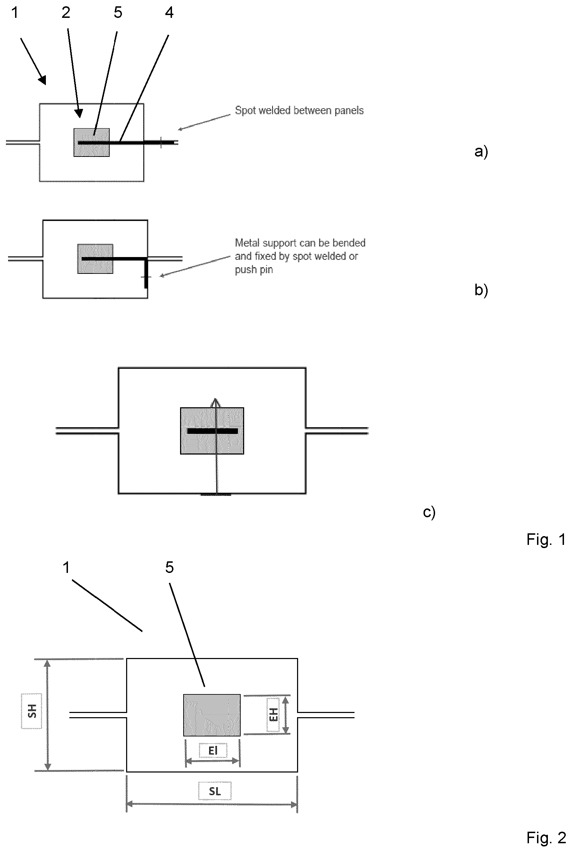

**Figures 1a and 1b** show each an embodiment of a cavity 1 with a sealing/reinforcement assembly 2 inside. The sealing/reinforcement assembly comprises in the present case a carrier 4 and an expandable material 5, which expands under the influence of heat. A carrier is not a mandatory but a preferred feature of the present invention. The cavity comprises in the present case two parts, which are joined together, in the present example at a flange. In the present case, the cross-section of the cavity is rectangular, but the skilled person understands, that the cross-section may have any shape and/or any size. Typical shapes of cross-sections is rectangular, square, circular and/or elliptical. The shape of the cavity may change with its axial direction, which is here the direction perpendicular to the paper-plane. The cavity is part of the body in white of a transportation vehicle, preferably an automotive. In the embodiment according to Figure 1a, the carrier 4 is welded, here spot-welded, to the cavity, here the flange of the cavity. In the embodiment according to Figure 1b, the sealing/reinforcement assembly 2 is fixed to the cavity by welding or by means of a clip, here a push-pin. The carrier may be straight or bended as depicted in Fig. 1b. In the embodiments according to both Figures, the geometrical center of the cross-section expandable material and the geometrical center of the cross-section of the cavity are identical. This is a preferred but not a mandatory embodiment of the present invention. **Figure 1c** depicts an embodiment in which the carrier is clipped to the cavity. Otherwise reference is made to the embodiments according to Figure 1a and 1b.

**Figure 2** shows details of the cavity 1 and the expandable material 5 inside. In this and in the following Figures, the carrier has been omitted to simplify the illustration. According to the present invention, the shape and the size of the cross-section must be specified. In the present case, the shape of the cross-section in which the expandable material shall be placed, is rectangular and has dimensions SL * SH. The expandable material has, in the present case also a rectangular cross-section with the dimensions EL * EH. The geometrical centers of the two cross-sections coincide in the present case.

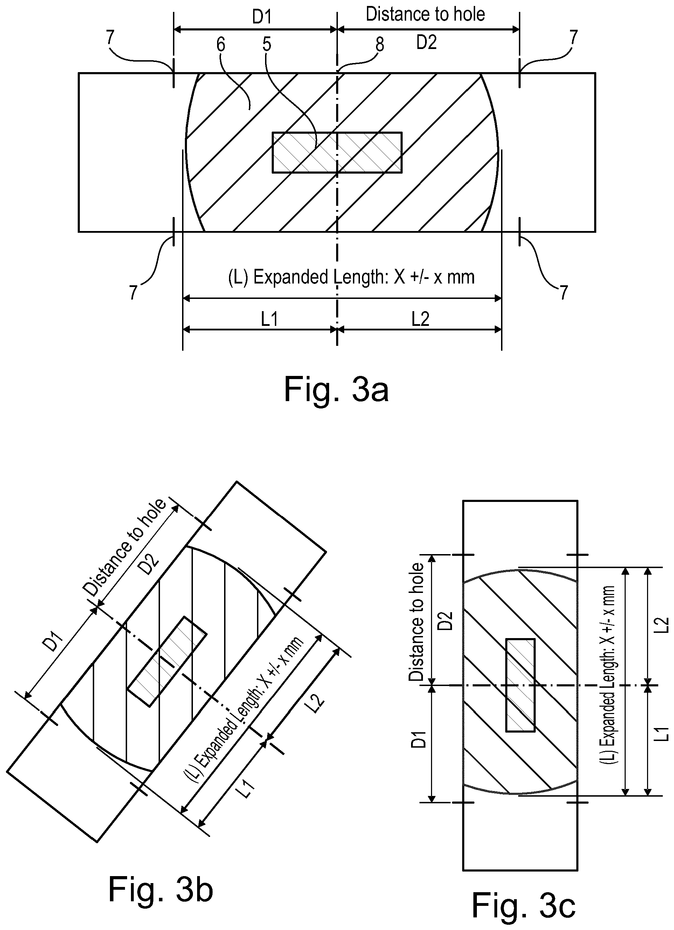

**Figures 3a - 3c** show three different orientations of the cavity 1. All Figures 3a - 3c, depict the axial extension of the cavity and the expandable material. In the embodiment according to Figure 3a, the spatial orientation of the axial extension of the cavity and the expandable material is horizontal. The axial fixation location of the expandable material is indicated by the reference sign 8 and the dotted line. In the present case, the expandable material is fixed at its axial center, which is a preferred embodiment. Figure 3a also depicts, that in the present case, the cavity has at least one hole 7, here four holes 7, which are for example utilized to attach a part (not depicted) to the cavity 1. The distance of the holes 7 from the fixation point is D1 and D2, respectively. Since it is not desirable to close the holes with expanded material or even an outflow of expanded material out of the hole(s) 7, the length (D1 +D2) is the maximal acceptable expansion length. Figure 3a also depicts the expanded material 6 and its extension L1 and L2 in the axial direction. It can be seen that L1 is smaller than D1 and L2 smaller than D2, so that the hole(s) 7 are not closed with expanded material. In the embodiment according to Figure 3a, it can be expected, that L1 and L2 are essentially identical. The maximal acceptable expansion length D1+D2 can be, preferably is a result of the inventive method and is dimensioned such that it is larger than L1+L2. The axial position of the expandable material, here position 8, can also be a result of the inventive method.

**Figures 3b and 3c** show in principal the embodiment according to Figure 3a so that reference can be made to the disclosure above. However, in the embodiment according to Figure 3b, the axial extension of the cavity 1 is inclined, here at an angle of about 45° relative to a horizontal plane, while in the embodiment according to Figure 3c, the orientation of the axial extension of the cavity is vertical or parallel to the direction of the gravitation force. In the embodiments according to Figures 3b and 3c, the length L2 is smaller than L1 even though depicted differently. The spatial orientation of the axial direction of the cavity 1 is an input parameter for the inventive method.

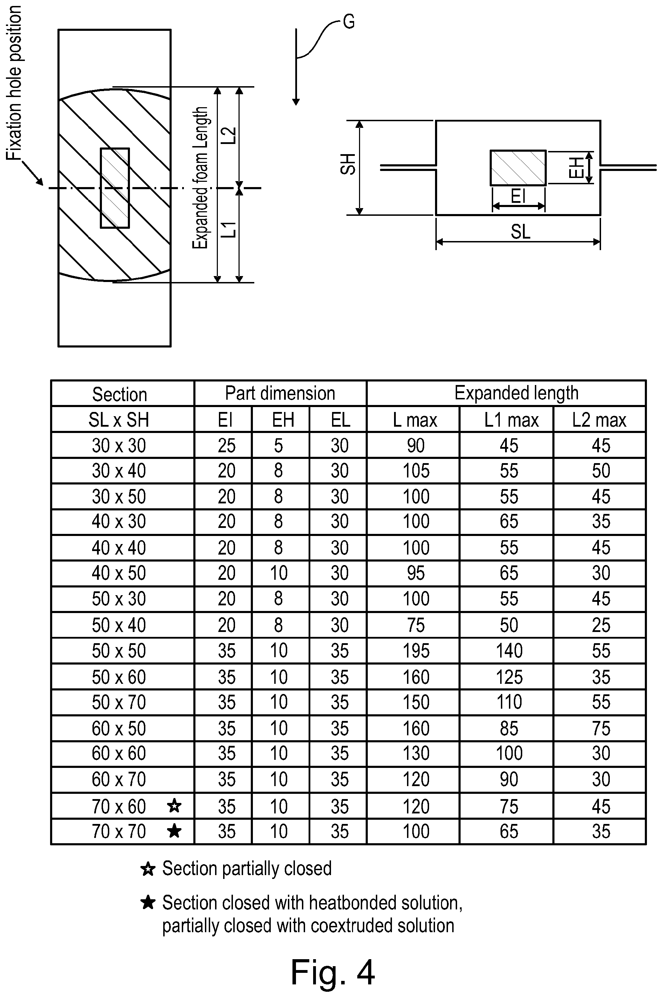

In order to execute the inventive method, data must be acquired about the expansion characteristics of a certain expandable material dependent on its shape and size of the expandable material and also dependent on the shape and size of the cross-section of a cavity into which the expandable material is placed. The data can be acquired for different orientations of the axial extension of the cavity. The data may be dependent upon the temperature and/or the temperature vs time curve at which the expansion takes place. The data can be acquired experimentally or calculated. The data is preferably stored in the data base of a computer. The expandable part is provided in the center of the cross-section of the cavity. The extension of the expandable part in axial direction EL extends parallel to the axial extension of the cavity. **Figure 4** shows the data for a vertically oriented cavity with a rectangular or square cross-section. Starting from the left-hand side of the table, the first column shows the width and the height of the cross-section of the cavity. The next three columns specify the dimensions of the expandable part in its unexpanded state, wherein El and EH specify the cross-section of the expandable material and EL its length in the direction parallel to the length axis of the cavity. The last three columns show the length of the expanded material. With the exemptions of the last two rows, the cross-section, SH * SL, of the cavity is always entirely closed by the expanded material. L max specifies the maximal expanded length and L1 max is expanded length in one direction of the axial extension of the cavity and L2 max is the expanded length in the opposite direction. L2 is the expansion against the gravitational force and L1 the expansion in the direction of the gravitational force. This table is the basis for the selection of an appropriate expandable material, particularly its shape and its size to fill the cross section of a cavity entirely and along a desired expansion length. The table can also give a guideline where to position holes in cavity, particularly to dimension D1 and/or D2.

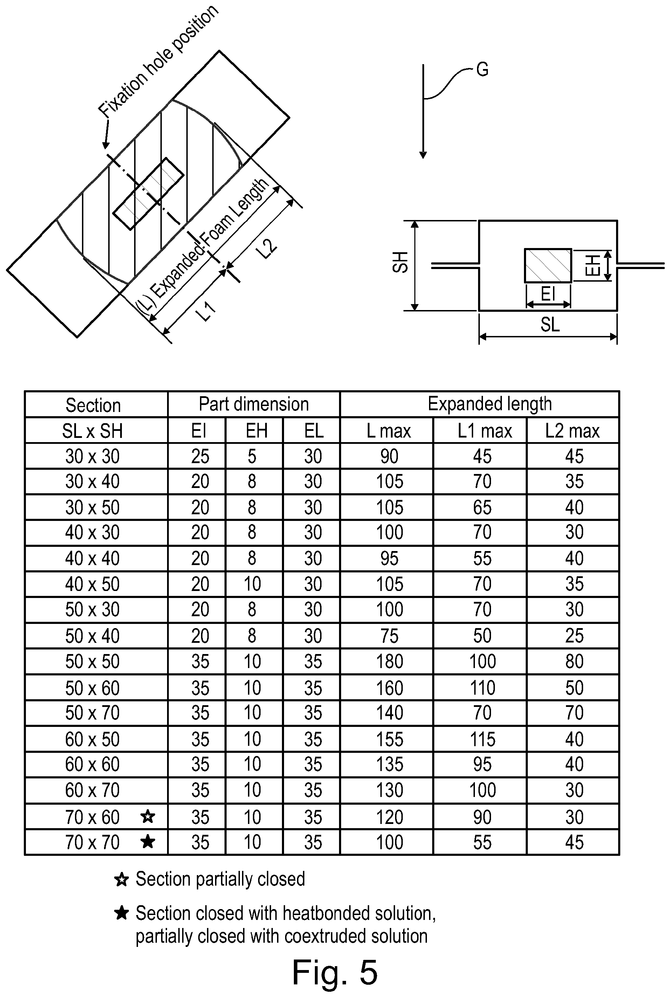

Regarding **Figure 5** reference to the disclosure regarding Figure 4 can be made with the exemption that in the present case the not vertical but inclined at a 45° angle. The direction of the gravitational force G is indicated in the Figure.

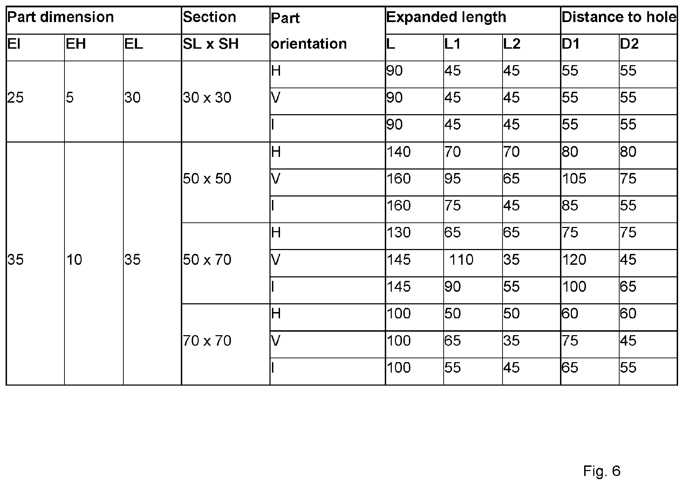

According to **Figure 6** the inventive method can be explained. Let's assume that a cavity with a cross-section of SL * SH = 50 * 50 shall be filled with an expanded material. The axial extension of the cavity is horizontal. Inserting this information into the table according to Figure 6 would result in the selection of an expandable material 35 x 10 x 35. This expandable material would be installed in the center of the cross-section of the cavity. From the table, the artesian also derives that the expected expansion length L1 + L2 is 70 mm each. Hence, in case holes 7 are needed in the cavity wall in the vicinity of the expanded material, they should be placed 80 mm away from the center of the expandable material, since D1 and D2 are both 80 mm.

### Reference signs

- 1: cavity
- 2: sealing/reinforcement assembly
- 3: fixation location
- 4: carrier
- 5: expandable material
- 6: expanded material
- 7: hole
- 8: axial fixation position of the expandable material
- D1: distance to hole
- D2: distance to hole
- G: gravitational force
- H: horizontal
- I: inclined
- L: expected expansion length
- L1: expected sub-extension length in one direction
- L2: expected sub-extension length in the opposite direction
- V: vertical
- El: width of the component 2
- EH: height of the component 2
- EL: length of the component 2
- SL: width of the cavity
- SH: height of the cavity

## Claims

1. Method to design a cavity (1) of a vehicle, the cavity comprising a sidewall and define the position of a sealing/reinforcement assembly (2) in the designed cavity and seal and/or reinforce the defined cavity (1) with an expandable sealing/reinforcement assembly (2) comprising the following steps:
a. determine the cross-section of the cavity (2)
b. determine the orientation (h, l, v) of the axial extension of the cavity
c. select the sealing/reinforcement assembly (2) from a predetermined data set based on the data according to steps a - b,
d. determine the axial extension of the cavity without any hole (D1 + D2),
e. place the sealing/reinforcement assembly into the designed cavity (1) and
f. expand the sealing/reinforcement assembly.

2. Method according to claim 1, **characterized in, that** the sealing/reinforcement assembly (2) is fixed in the cavity in a fixation location (3), preferably in the center of the cross-section.

3. Method according to one of the preceding claims, **characterized in, that** center of the cross-section of the cavity coincides with the center of the cross-section of the sealing/reinforcement assembly.

4. Method according to one of the preceding claims, **characterized in, that** the data set comprises data about the width (SL) and the height (SH) of the cross section of the cavity (2).

5. Method according to one of the preceding claims, **characterized in, that** expected expansion length is divided into two sub-length (L1, L2).

6. Method according to claim 5, **characterized in, that** the sub-lengths (L1, L2) differ.

7. Method according to one of the preceding claims, **characterized in, that** expandable component is provided on a carrier (4)

8. Method according to claim 7, the carrier (4) and the expandable component are coextruded and/or overmolded and/or heat-welded and/or heat-bonded.

9. Method according to one of the preceding claims, **characterized in, that** the expandable material is expanded due to energy input, preferably heat energy, more preferably energy from an oven.

10. Method according to claim 9, **characterized in, that** the data set is dependent circumstances that influence the rate of expansion of the expandable component.

## Patentansprüche

1. Verfahren zum Auslegen eines Hohlraums (1) eines Fahrzeugs, wobei der Hohlraum eine Seitenwand umfasst und die Position einer Dichtungs-/Verstärkungsanordnung (2) im ausgelegten Hohlraum definiert wird sowie der definierte Hohlraum (1) mit einer expandierbaren Dichtungs-/Verstärkungsanordnung (2) abgedichtet und/oder verstärkt wird, umfassend die folgenden Schritte:
a. Ermitteln des Querschnitts des Hohlraums (2),
b. Ermitteln der Ausrichtung (h, 1, v) der axialen Erstreckung des Hohlraums,
c. Auswählen der Dichtungs-/Verstärkungsanordnung (2) aus einem vordefinierten Datensatz basierend auf den Daten gemäß der Schritte a-b,
d. Ermitteln der axialen Erstreckung des Hohlraums ohne Löcher (D1 + D2),
e. Einbringen der Dichtungs-/Verstärkungsanordnung in den ausgelegten Hohlraum (1) und
f. Expandieren der Dichtungs-/Verstärkungsanordnung.

2. Verfahren nach Anspruch 1, **dadurch gekennzeichnet, dass** die Dichtungs-/Verstärkungsanordnung (2) an einer Fixierstelle (3) im Hohlraum befestigt wird, vorzugsweise im Mittelpunkt des Querschnitts.

3. Verfahren nach einem der vorhergehenden Ansprüche, **dadurch gekennzeichnet, dass** der Mittelpunkt des Querschnitts des Hohlraums mit dem Mittelpunkt des Querschnitts der Dichtungs-/Verstärkungsanordnung zusammenfällt.

4. Verfahren nach einem der vorhergehenden Ansprüche, **dadurch gekennzeichnet, dass** der Datensatz Daten über die Breite (SL) und die Höhe (SH) des Querschnitts des Hohlraums (2) umfasst.

5. Verfahren nach einem der vorhergehenden Ansprüche, **dadurch gekennzeichnet, dass** die erwartete Expansionslänge in zwei Teillängen (L1, L2) unterteilt wird.

6. Verfahren nach Anspruch 5, **dadurch gekennzeichnet, dass** die Teillängen (L1, L2) unterschiedlich sind.

7. Verfahren nach einem der vorhergehenden Ansprüche, **dadurch gekennzeichnet, dass** das expandierbare Bauteil auf einem Träger (4) bereitgestellt wird.

8. Verfahren nach Anspruch 7, **dadurch gekennzeichnet, dass** der Träger (4) und das expandierbare Bauteil coextrudiert und/oder umspritzt und/oder wärmegeschweißt und/oder wärmegebondet werden.

9. Verfahren nach einem der vorhergehenden Ansprüche, **dadurch gekennzeichnet, dass** das expandierbare Material durch Energiezufuhr, vorzugsweise Wärmeenergie, insbesondere Energie aus einem Ofen, expandiert wird.

10. Verfahren nach Anspruch 9, **dadurch gekennzeichnet, dass** der Datensatz von Umständen abhängt, die die Expansionsrate des expandierbaren Bauteils beeinflussen.

## Revendications

1. Procédé pour concevoir une cavité (1) d'un véhicule, la cavité comprenant une paroi latérale, et définir la position d'un ensemble de scellement/renforcement (2) dans la cavité conçue et sceller et/ou renforcer la cavité (1) définie avec un ensemble de scellement/renforcement (2) extensible comprenant les étapes suivantes :
a. déterminer la section transversale de la cavité (2),
b. déterminer l'orientation (h, 1, v) de l'extension axiale de la cavité,
c. sélectionner l'ensemble de scellement/renforcement (2) dans un ensemble de données prédéterminé sur la base des données selon les étapes a à b,
d. déterminer l'extension axiale de la cavité sans aucun trou (D1 + D2),
e. placer l'ensemble de scellement/renforcement dans la cavité conçue (1), et
f. étendre l'ensemble de scellement/renforcement.

2. Procédé selon la revendication 1, **caractérisé en ce que** l'ensemble de scellement/renforcement (2) est fixé dans la cavité dans un emplacement de fixation (3), de préférence au centre de la section transversale.

3. Procédé selon l'une des revendications précédentes, **caractérisé en ce que** le centre de la section transversale de la cavité coïncide avec le centre de la section transversale de l'ensemble de scellement/renforcement.

4. Procédé selon l'une des revendications précédentes, **caractérisé en ce que** l'ensemble de données comprend des données sur la largeur (SL) et la hauteur (SH) de la section transversale de la cavité (2).

5. Procédé selon l'une des revendications précédentes, **caractérisé en ce que** la longueur d'extension attendue est divisée en deux sous-longueurs (L1, L2).

6. Procédé selon la revendication 5, **caractérisé en ce que** les sous-longueurs (L1, L2) diffèrent.

7. Procédé selon l'une des revendications précédentes, **caractérisé en ce que** le composant extensible est fourni sur un support (4).

8. Procédé selon la revendication 7, dans lequel le support (4) et le composant extensible sont coextrudés et/ou surmoulés et/ou thermosoudés et/ou thermoliés.

9. Procédé selon l'une des revendications précédentes, **caractérisé en ce que** le matériau extensible est étendu en raison d'une entrée d'énergie, de préférence de l'énergie thermique, plus préférablement de l'énergie d'un four.

10. Procédé selon la revendication 9, **caractérisé en ce que** l'ensemble de données est dépendant de circonstances qui influencent la vitesse d'extension du composant extensible.
